# EUROPÄISCHE PATENTSCHRIFT

(11) **EP 2 030 683 B1**
(45) Veröffentlichungstag und Bekanntmachung des Hinweises auf die Patenterteilung: **02.10.2013**
(21) Anmeldenummer: 07016192.2
(22) Anmeldetag: 17.08.2007
(51) Int. Cl.: B01L 3/00, B01L 3/02, G01N 35/10, B65D 51/00

(54) **Vorrichtung und Verfahren zur Entnahme von Substanzen aus vorgefüllten Behältnissen**
Device and method for removing substances from pre-filled containers
Dispositif et procédé destiné au retrait de substances de récipients préremplis

(43) Veröffentlichungstag der Anmeldung: 04.03.2009
(73) Patentinhaber: Qiagen GmbH, 40724 Hilden (DE)
(72) Erfinder: Voit, Thomas, 40721 Hilden (DE); Wildhaber, Andrea, 8732 Neuhaus (CH)
(74) Vertreter: Leidescher, Thomas

(56) Entgegenhaltungen:
- EP-A- 0 126 390
- EP-A- 0 478 905
- WO-A-89/12829
- WO-A-90/11752
- WO-A-2005/100945
- WO-A1-2007/011305
- DE-A1- 19 512 607
- DE-A1-102004 038 152
- US-A- 4 577 514
- US-A- 4 982 740
- US-A- 6 027 694
- US-A1- 2006 263 250
- US-B1- 6 475 774

## Beschreibung

Die vorliegende Erfindung betrifft eine Vorrichtung zur Entnahme von Substanzen aus vorgefüllten Behältnissen. Die Vorrichtung ist zum Beispiel für Anwendungszwecke in der Biochemie, Molekulargenetik, Mikrobiologie, medizinischen Diagnostik oder forensischen Medizin geeignet.

Auf vielen technischen Gebieten wie beispielsweise der Chemie, der Biologie, der Biochemie, der Biotechnologie, der Medizin oder der Umwelttechnologie ist es notwendig, biologische Zielmoleküle enthaltende Materialien (z.B. fließfähige biologische Proben) zu analysieren, zu separieren, zu verarbeiten oder miteinander in Reaktion zu bringen. Zu diesem Zweck werden die Flüssigkeiten oder Materialien mit verschiedenen Verfahren gefiltert, abgekühlt, erhitzt, in Bestandteile zerlegt, gewaschen, pipettiert und/oder mittels anderer Verfahren behandelt. Häufig ist es notwendig, eine lange und komplexe Folge von Verarbeitungsschritten zu durchlaufen, um das biologische Material zu präparieren. Dabei werden während der Verarbeitung verschiedene Reagenzien zugesetzt. Je nach Art der Analyse bzw. Aufbereitung der Probe kommen dabei verschiedene Kombinationen von Reagenzien während des Verfahrens zum Einsatz. Insbesondere bei größeren Probenmengen erfolgt die Prozessierung vorzugsweise automatisiert. Üblicherweise werden dabei die zur Prozessierung benötigten Reagenzien in vorgefüllten Behältnissen von einer Bedienperson in eine Vorrichtung zur automatischen Probenverarbeitung eingesetzt. Zur Entnahme der Reagenzien ist die Vorrichtung mit Einrichtungen zum Öffnen der Behältnisse - wenn diese bei der Beladung des Gerätes nicht schon geöffnet wurden - und zur gesteuerten Entnahme versehen. Dabei kann das Öffnen und Entnehmen durch dasselbe Werkzeug vorgesehen sein, indem zum Beispiel eine Kanüle durch einen perforierbaren Deckel des Behältnisses stößt und anschließend über eine externe Saugvorrichtung das Reagenz abgesaugt wird.

EP-A-0126390 offenbart ein System zur Entnahme einer pipettierbaren Substanz aus einem vorgefüllten Behältnis, das mit einem Deckel verschlossen ist, der mindestens eine Öffnungsfläche aufweist. Das System umfasst weiterhin ein Öffnungswerkzeug mit einem Rohr, das einen im wesentlichen der Form der Öffnungsfläche entsprechenden Querschnitt und an einem distalen Ende einen relativ zur Rohrlängsachse im wesentlichen schräg verlaufenden Abschluss aufweist, der beim Anwenden des Öffnungswerkzeugs einen innerhalb der Öffnungsfläche gelegenen Teil des Deckels in Richtung des Behältnisses bewegt, um so eine Öffnung in dem Deckel zu schaffen. Das System umfasst auch einen Angriffspunkt für ein Transportwerkzeug, wobei das Öffnungswerkzeug dazu ausgelegt ist, nach seiner Anwendung an dem Behältnis zu verbleiben, und ein Transportwerkzeug zum Bewegen des Öffnungswerkzeugs durch den Deckel, und ein Pipettierwerkzeug, das dazu angepasst ist, im angewendeten Zustand des Öffnungswerkzeugs durch das Rohr zumindest zu einem Teil seiner Länge in das Innere des Behältnisses eingeführt zu werden, und dessen eines Ende mit einer Ansaugvorrichtung zum Ansaugen einer pipettierbaren Substanz aus dem Inneren des Behältnisses verbindbar ist.

US-B-6,475,774 offenbart ein Behältnis zum Bereitstellen von pipettierbaren Substanzen, mit einer Mehrzahl von gleichartig geformten Kammern, die jeweils mindestens eine Öffnung aufweisen, einem Deckel zum Verschluss der Öffnungen, und in den Deckel eingeformten, konusartigen Führungen.

WO-2007/011305 zeigt verschiedene Auslegungsformen von Solltrennstellen für Abdichtungsmembranen, bei denen etwa ein Begrenzungsbereich als Solltrennlinie ausgeführt ist.

Es sind eine Vielzahl von Varianten für die Entnahme von pipettierbaren Substanzen aus vorgefüllten Behältnissen bekannt. Dennoch lässt der Stand der Technik großen Spielraum für Verbesserungen. Es ist daher Aufgabe der vorliegenden Erfindung, eine solche Vorrichtung im Hinblick auf eine Steigerung der Prozesseffizienz und der Wirtschaftlichkeit auszugestalten.

Ein Aspekt der Erfindung betrifft ein Öffnungswerkzeug für ein vorgefüllten Behältnis, das mit einem Deckel verschlossen ist, der mindestens eine Öffnungsfläche aufweist, die von einem Begrenzungsbereich begrenzt ist, umfassend: mehrere Rohre, die in einer m x n Matrix angeordnet und durch ein Element verbunden sind, wobei die Rohre einen im wesentlichen der Form der Öffnungsfläche entsprechenden Querschnitt und an einem distalen Ende einen relativ zur Rohrlängsachse im wesentlichen schräg verlaufenden Abschluss aufweisen, der beim Anwenden des Öffnungswerkzeugs einen innerhalb der Öffnungsfläche gelegenen Teil des Deckels in Richtung des Behältnisses bewegt, um so eine Öffnung in dem Deckel zu schaffen, wobei der schräge Abschluss an seinem distalen Ende eine Spitze aufweist und über den Bereich von seinem dorsalen Ende zum distalen Ende mindestens zwei unterschiedliche Winkel α relativ zur Rohrlängsachse aufweist und dazu ausgelegt ist, die Verbindung zwischen Öffnungsfläche und Deckel entlang des Begrenzungsbereichs teilweise aufzutrennen, und wobei die Rohre verschiedene Winkelstellungen in Bezug auf ihre Längsachsen aufweisen.

Vorzugsweise ist der Winkel α der Abschrägung des Abschlusses des Rohrs relativ zur Rohrlängsachse im Bereich des distalen Endes des Abschlusses im Wesentlichen kleiner ist als in anderen Bereichen des Abschlusses.

Vorzugsweise weist ein Rohr des Öffnungswerkzeugs ein Halteelement zur Fixierung des Öffnungswerkzeugs an dem Behältnis auf, vorzugsweise in Form einer das Rohr zumindest teilweise umlaufenden Schulter oder Rille.

Vorzugsweise gewährleistet ein Ende des Rohrs einen reibschlüssigen Sitz des Rohrs in dem Deckel im aufgesetzten Zustand des Öffnungswerkzeugs, vorzugsweise durch Ausgestaltung in Form eines Konus.

Ein weiterer Aspekt betrifft ein Behältnis zum Bereitstellen von pipettierbaren Substanzen, umfassend: eine Mehrzahl von gleichartigen oder unterschiedlich geformten Kammern, die jeweils mindestens eine Öffnung aufweisen, mindestens einen Deckel zum Verschluss der Öffnungen, in dem mindestens einen Deckel eingeformte konusartige Führungen, wobei der Deckel mehrere Öffnungsflächen aufweist, die jeweils durch einen Begrenzungsbereich begrenzt sind, der als Solltrennstelle ausgelegt ist, und wobei die Öffnungsflächen derart angeordnet sind, um eine Öffnung des Behältnisses mit einem Öffnungswerkzeug zu ermöglichen; und wobei die konusartigen Führungen so in dem Deckel über den Öffnungsflächen angeordnet sind, dass Rohre des Öffnungswerkzeugs beim Aufsetzen auf den Deckel zu den Öffnungsflächen geführt und zentriert werden.

Das Behältnis weist vorzugsweise ein Positionselement auf, das aus der Gruppe ausgewählt ist, die aus einem Stift, einem Loch, einem Langloch, einer Nut und einem Steg besteht.

Das Behältnis ist vorzugsweise so ausgestaltet, dass eine Öffnungsfläche im wesentlichen eine Form aufweist, die aus der Gruppe Kreis, Ellipse, und Polygon ausgewählt ist.

Das Behältnis ist vorzugsweise so ausgestaltet, dass eine Öffnungsfläche durch eines oder mehrere der Merkmale charakterisiert ist, das oder die aus der folgenden Gruppe ausgewählt ist/sind:
- die Öffnungsfläche weist eine im wesentlichen geringere Materialstärke als der Deckel auf,
- die Öffnungsfläche weist ein anderes Material als der Deckel auf,
- die Öffnungsfläche ist durch einen Begrenzungsbereich begrenzt, der im Wesentlichen eine geringere Materialstärke als der Deckel aufweist, wobei der Begrenzungsbereich vorzugsweise Bereiche unterschiedlicher Materialstärke aufweist,
- die Öffnungsfläche ist durch einen Begrenzungsbereich mit größerer Materialstärke als der Deckel begrenzt.

Vorzugsweise ist das Behältnis mit im wesentlichen sämtlichen benötigten Substanzen für ein vorbestimmtes Verfahren insbesondere zum Prozessieren, Aufreinigen und/oder Analysieren von biologische Zielmoleküle enthaltenden Materialien gefüllt.

Ein weiterer Aspekt betrifft ein System zur Entnahme einer pipettierbaren Substanz aus einem vorgefüllten Behältnis, umfassend ein Behältnis gemäß Ausführungsformen, ein Öffnungswerkzeug gemäß Ausführungsformen mit einem Angriffspunkt für ein Transportwerkzeug, wobei das Öffnungswerkzeug dazu ausgelegt ist, nach seiner Anwendung an dem Behältnis zu verbleiben, ein Transportwerkzeug zum Bewegen des Öffnungswerkzeugs durch den Deckel, ein Pipettierwerkzeug, das dazu angepasst ist, im angewendeten Zustand des Öffnungswerkzeugs durch das Rohr zumindest zu einem Teil seiner Länge in das Innere des Behältnisses eingeführt zu werden, und dessen eines Ende mit einer Ansaugvorrichtung zum Ansaugen einer pipettierbaren Substanz aus dem Inneren des Behältnisses verbindbar ist.

Vorzugsweise ist das System so ausgestaltet, dass ein dorsales Ende des Rohrs einen reibschlüssigen Sitz des Rohrs in dem Deckel im aufgesetzten Zustand des Öffnungswerkzeugs gewährleistet, vorzugsweise durch Ausgestaltung in Form eines Konus.

Vorzugsweise ist dabei eine durch eine Normale der Hauptebene des schrägen Abschlusses des Rohrs definierte Raumrichtung bei mindestens zweien der Rohre unterschiedlich.

Ein weiterer Aspekt der Erfindung betrifft ein Verfahren zur Entnahme einer pipettierbaren Substanz aus einem vorgefüllten Behältnis, mit den Schritten:
a) Bereitstellen eines Systems gemäß Ausführungsformen,
b) Automatisiertes oder manuelles Auflegen eines Öffnungswerkzeugs auf einen Deckel des Behältnisses,
c) Bewegen des Öffnungswerkzeugs durch den Deckel des Behältnisses, so dass ein Rohr des Öffnungswerkzeugs eine Öffnungsfläche in dem Deckel des Behältnisses mindestens teilweise öffnet und das Rohr zu mindestens einem Teil seiner Länge in das Innere des Behältnisses eindringt und dort fixiert wird,
d) Positionieren eines Pipettierwerkzeugs an eine Position über einer Durchlassöffnung in dem Öffnungswerkzeug und Absenken des Pipettierwerkzeugs in die Durchlassöffnung und in das darunter befindliche Rohr, bis mindestens ein Teil des Pipettierwerkzeugs aus dem distalen Ende des Rohrs heraus in die zu entnehmende Substanz ragt,
e) Ansaugen einer in dem Behältnis befindlichen pipettierbaren Substanz durch das Pipettierwerkzeug mittels einer damit verbundenen Ansaugvorrichtung.

Vorzugsweise umfasst das Verfahren einen weiteren Schritt f) in Form des vollständigen Herausziehens des Pipettierwerkzeugs aus dem Öffnungswerkzeug.

Vorzugsweise werden die Schritte d) bis f) mehrfach wiederholt, unter Verwendung derselben oder unterschiedlicher Pipettierwerkzeuge.

Vorzugsweise wird das Bewegen in Schritt c) durch das Eingreifen von Positionselementen zwischen dem Behältnis und dem Öffnungswerkzeug begleitet, die aus der Gruppe Stift - Loch, Stift - Langloch, und Nut - Steg ausgewählt sind.

Vorzugsweise werden die Schritte d) bis f) mit gleichzeitig mehreren Pipettierwerkzeugen durchlaufen.

Vorzugsweise weist das bei dem Verfahren eingesetzte Behältnis mehrere baulich getrennte Kammern auf, denen jeweils mindestens eine Öffnungsfläche in einem Deckel zugeordnet ist.

Vorzugsweise umfasst das Verfahren einen weiteren Schritt g), in dem das Behältnis mit aufgesetztem Öffnungswerkzeug mittels einer Abdeckung, die auf dem Öffnungswerkzeug angeordnet wird, verschlossen wird.

Im Hinblick auf die obigen Ausführungen wird ein System gemäß Anspruch 1, ein Behältnis nach Anspruch 10, ein Öffnungswerkzeug nach Anspruch 16 und ein Verfahren nach Anspruch 22 bereitgestellt.

Im Folgenden werden die Einzelheiten der Erfindung anhand verschiedener Ausführungsbeispiele unter Bezugnahme auf die beigefügten Zeichnungen erläutert. Darin zeigt:
- Fig. 1a-1b: schematische Darstellungen eines Systems gemäß einer Ausführungsform
- Fig. 2a: perspektivische Ansicht eines Behältnisses ohne Öffnungswerkzeug gemäß einer Ausführungsform
- Fig. 2b: perspektivische Ansicht eines Behältnisses mit Öffnungswerkzeug gemäß einer Ausführungsform
- Fig. 3a-3b: perspektivische Ansicht und seitliche Querschnittsansicht eines Deckels gemäß einer Ausführungsform
- Fig. 4a-4b: perspektivische Ansicht und Querschnittsansicht eines Öffnungswerkzeugs gemäß einer Ausführungsform
- Fig. 5a-5b: Querschnittsansichten eines Behältnisses mit Deckel und Öffnungswerkzeug gemäß einer Ausführungsform, vor und nach dem Öffnungsvorgang
- Fig. 6: Schematische Draufsicht auf eine Öffnungsfläche eines Deckels gemäß einer Ausführungsform
- Fig. 7a-7d: Perspektivische Ansichten und Querschnittsansicht von Rohren eines Öffnungswerkzeugs gemäß Ausführungsformen

Bei der folgenden Beschreibung verschiedener Ausführungsbeispiele der vorliegenden Erfindung sind funktional gleiche Merkmale der verschiedenen Ausführungsbeispiele mit denselben Bezugszeichen versehen.

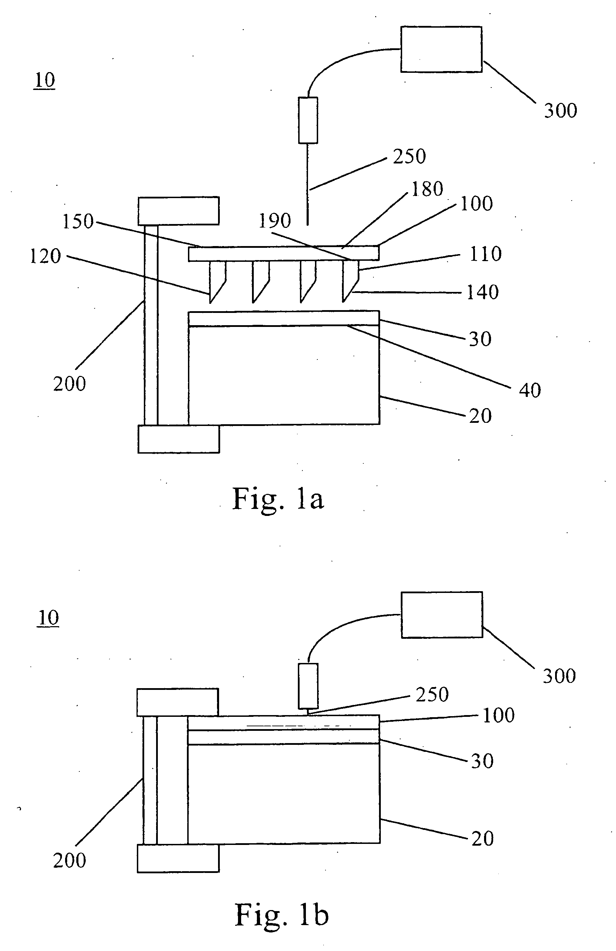

Fig. 1a zeigt schematisch eine bevorzugte Ausführungsform eines Systems gemäß der vorliegenden Erfindung. Ein mit pipettierbaren Substanzen (Reagenzien) vorgefülltes Behältnis (20) ist mit einem Deckel (30) verschlossen. Dieser weist mindestens eine Öffnungsfläche (40) auf. Ein Öffnungswerkzeug (100) umfasst mindestens ein Rohr (110), das einen im wesentlichen der Form der Öffnungsfläche entsprechenden Querschnitt und an seinem distalen Ende (120) einen relativ zur Rohrlängsachse im wesentlichen schräg verlaufenden Abschluss (140) (im folgenden auch Schneidkante genannt) aufweist. Zur Vorbereitung der Anwendung des Öffnungswerkzeugs wird dieses auf den Deckel des Behältnisses aufgelegt, so dass der Abschluss des Rohrs (110) auf der Öffnungsfläche aufliegt. Zur Öffnung werden das Öffnungswerkzeug und das Behältnis (20) gegeneinander gedrückt, typischerweise durch ein Transportwerkzeug (200), das an mindestens einem Angriffspunkt (150) an dem Öffnungswerkzeug oder/und an dem Behältnis angreift. Typische Ausgestaltungen eines solchen Transportwerkzeugs sind dem Fachmann bekannt.

Insbesondere können das Öffnungswerkzeug (100) und/oder das Behältnis (20) mit jeweils mindestens einem Positionselement zur passgenauen Positionierung an dem Transportwerkzeug (200) ausgestattet werden. Vorzugsweise werden dabei Elemente aus einer Gruppe gewählt, die aus Stift, Loch, Langloch, Nut und Steg besteht. Ein oder mehrere Positionselemente des Transportwerkzeugs (200) greifen während des Zusammendrückens mit einem dazu passenden Positionselement als Gegenpart ein, das an dem Behältnis und/oder dem Deckel (30) angebracht ist. Entsprechende mögliche Paarungen bilden Stift-Loch, Stift-Langloch, Nut-Steg oder Stift-Nut, wobei auch Kombinationen anderer Elemente als im Umfang der Erfindung betrachtet werden.

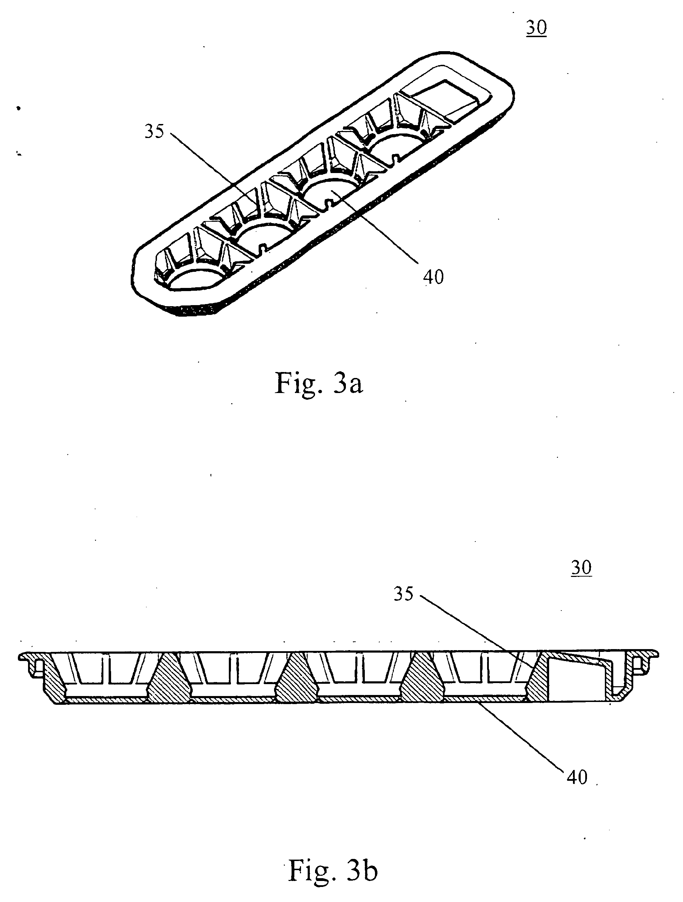

Beim Öffnen wird ein innerhalb der Öffnungsfläche (40) gelegener Teil des Deckels (30) durch den Druck des Rohrabschlusses in Richtung des Behältnisses (20) bewegt und auf diese Weise eine Öffnung in dem Deckel (30) geschaffen. Die Figuren 3a und 3b zeigen eine bevorzugte Ausführungsform des Deckels. Gleichzeitig dringt das Rohr durch die Öffnung in das Behälterinnere ein. Das Öffnungswerkzeug (100) verbleibt nach dem beschriebenen Öffnungsvorgang an dem Behältnis (20).

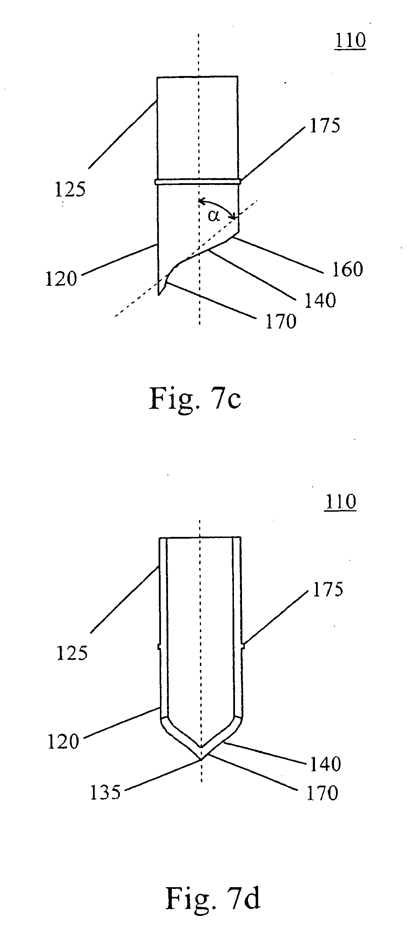

Dabei kann ein stabiler Sitz des Werkzeugs im Behältnis über eine Anzahl verschiedener Varianten sichergestellt werden. In einer bevorzugten Ausführungsform steckt das Öffnungswerkzeug durch mechanischen Reibschluss im Deckel (30) des Behältnisses (20). Eine andere Variante umfasst ein Halteelement, etwa eine an der Außenseite des Rohrs umlaufende Schulter (175) oder Rille, die mit dem Deckel (30) des Behältnisses (20) eingreift. Die Schulter und andere Details sind in den Fig. 1a und 1b aus Übersichtlichkeitsgründen nicht eingezeichnet, eine beispielhafte Darstellung der Schulter (175) findet sich in Fig. 7c und 7d. Die Schulter oder Rille kann dabei durchgehend oder nur stellenweise an der Außenseite des Rohrs umlaufen.

Zur Entnahme der vorgefüllten Substanz wird danach ein Pipettierwerkzeug (250) zu mindestens einem Teil seiner Länge durch eine Durchlassöffnung (190) in dem Rohr (110) des Öffnungswerkzeugs in das Innere des Behältnisses (20) eingeführt, bis mindestens ein Teil des Pipettierwerkzeugs aus dem distalen (unteren) Ende (120) des Rohrs heraus in die zu entnehmende Substanz ragt. Das Pipettierwerkzeug ist mit einer Ansaugvorrichtung (300) verbunden, die zum Ansaugen einer pipettierbaren Substanz aus dem Inneren des Behältnisses (20) ausgelegt ist. Das Pipettierwerkzeug kann sowohl mittels Aktoren, die typischerweise von einer automatischen Steuerung angesteuert werden, als auch manuell eingeführt werden, dies gilt ebenso für ein späteres Herausbewegen des Pipettierwerkzeugs aus dem Behältnis bzw. dem Rohr. Fig 1b zeigt schematisch das System mit angewendetem Öffnungswerkzeug (100) und einem Pipettierwerkzeug (250), die in das Behältnis eingeführt wurde.

Durch das Pipettierwerkzeug, dessen Ende in die zu pipettierende Substanz in dem vorgefüllten Behältnis (20) ragt, wird dann mittels der Ansaugvorrichtung (300) die Substanz aus dem Behältnis entnommen. Dabei können entweder Teile des oder der gesamte Inhalt des Behältnisses in einem Arbeitsgang entnommen werden. Beispielsweise kann über das Pipettierwerkzeug ein Teil des Inhalts entnommen werden, das Pipettierwerkzeug vollständig aus dem Behältnis entfernt (etwa herausgefahren) und z.B. an eine Parkposition bewegt werden. Zu einem späteren Zeitpunkt kann mit demselben oder einem weiteren Pipettierwerkzeug ein weiterer Teil des Inhalts des Behältnisses entnommen werden.

Der Vorteil der vorliegenden Erfindung gegenüber bekannten Systemen aus dem Stand der Technik besteht darin, dass der Vorgang der Öffnung des Deckels und die Entnahme der pipettierbaren Substanz getrennt voneinander ablaufen. Dadurch wird verhindert, dass das spitze Ende des Pipettierwerkzeugs, das bei Systemen aus dem Stand der Technik zum Durchstoßen des Deckels verwendet wird, verstopft oder beschädigt wird. Gleichzeitig sinken die Anforderungen an die mechanische Stabilität des Pipettierwerkzeugs, weil es nicht die zum Öffnen des Deckels nötigen Kräfte übertragen muss. Zudem ist durch die Trennung von Öffnungswerkzeug und Pipettierwerkzeug auch eine Detektion des Pegels der in dem Behältnis verbleibenden pipettierbaren Substanz durch die Öffnung möglich, weil die Öffnung auch nach nach Herausziehen des Pipettierwerkzeugs erhalten bleibt. Ausführungsformen der Erfindung betreffen weiterhin Ausgestaltungen des Öffnungswerkzeugs und des Deckels, die ein leichteres und zuverlässiges Öffnen ermöglichen.

Wenn das Pipettierwerkzeug nach einem oder mehreren Entnahmevorgängen vollständig aus dem Behältnis entfernt wurde und zu diesem Zeitpunkt keine weiteren Substanzen entnommen werden sollen, kann das Behältnis (20) mit aufgesetztem Öffnungswerkzeug (100) optional mittels einer Abdeckung wieder verschlossen werden, um eine eventuelle Kontamination oder eine Verdunstung der vorgefüllten Substanzen zu verhindern. Die Abdeckung wird dabei auf dem Öffnungswerkzeug angeordnet. Die Art der Abdeckung ist dabei nicht besonders eingeschränkt und es gibt vielfältige aus dem Stand der Technik bekannte Möglichkeiten zur Realisierung, z.B. Folien, Deckel aus nachgiebigen oder steifen Materialen wie Kunststoff, Metall o.ä. Die Abdeckung kann sowohl zur einmaligen als auch zur mehrmaligen Verwendung vorgesehen sein.

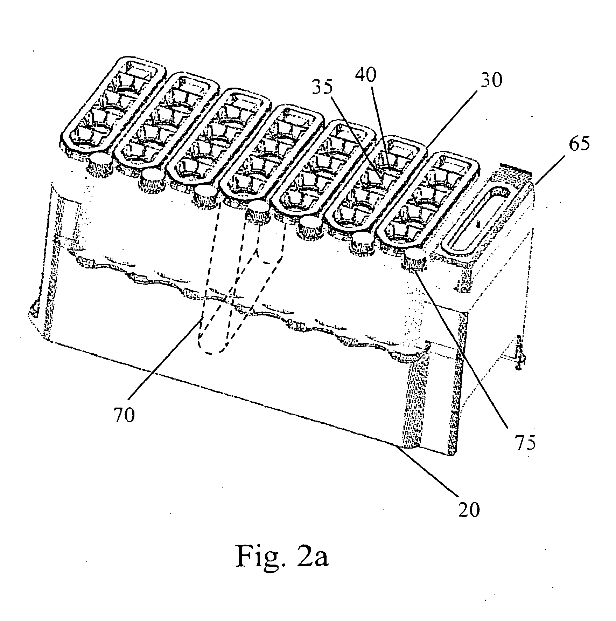

Fig. 2a zeigt ein Behältnis (20) nach einem Ausführungsbeispiel der Erfindung. Das Behältnis kann mehrere, voneinander baulich getrennte, gleich oder unterschiedlich geformte Kammern oder Einsätze (70) aufweisen, die jeweils mindestens eine Öffnung aufweisen. In der Figur ist exemplarisch und schematisch eine Kammer (70) gestrichelt dargestellt. In einem typischen Anwendungsfall der Erfindung umfasst das Behältnis (20) mehrere (hier sieben) Kammern bzw. Einsätze (70), die mit im wesentlichen sämtlichen benötigten Substanzen für ein vorbestimmtes Verarbeitungsverfahren, insbesondere zum Prozessieren, Separieren und/oder Analysieren eines ein biologisches Zielmolekül enthaltenden Materials, gefüllt sind. Dazu zählen beispielsweise jeweils eine oder mehrere Lyselösungen, Waschlösungen, Elutionslösungen, Puffer, Bindelösungen, Trennmaterialien in pipettierbarer Form wie Suspensionen von magnetischen Beads, Enzyme, Sonden, Marker, Ausgangsmaterialien für Downstreamapplikationen wie PCR, Arrays und/oder Assays u.ä.

Die Kammern bzw. Einsätze (70) sind in der beschriebenen Ausführungsform vorzugsweise mit den unten näher beschriebenen Deckeln (30) versehen. Neben den Kammern, bei denen die Entnahme ihres Inhaltes mittels des erfindungsgemäßen Verfahrens bzw. Systems erfolgt, kann das Behältnis weitere Kammern und/oder Einsätze (65, 75) umfassen, die vorzugsweise ebenfalls Materialien zur Durchführung der geplanten Prozesse enthalten, bei denen die Entnahme ihres Inhaltes aber nicht mittels des erfindungsgemäßen Verfahrens bzw. Systems erfolgt. So kann ein Teil der oben beispielhaft genannten Materialien sich in den Kammern bzw. Einsätzen (70) befinden, während weitere benötigte Substanzen vorteilhafterweise in die verbleibenden Kammern und/oder Einsätze des Behältnisses eingebracht werden. Es ist besonders vorteilhaft, dass sich in den Kammern (70) die ein oder mehreren Lyselösungen, Waschlösungen, Elutionslösungen, Bindelösungen, und/oder Puffer befinden.

Die Verwendung von Einsätzen, die in das Behältnis eingebracht und diesem wieder entnommen werden können, hat den Vorteil, dass Materialien die einer besonderen Behandlung bedürfen, wie beispielsweise Enzyme, die gekühlt werden müssen, oder Suspension, die direkt vor der Anwendung noch einmal homogenisiert werden müssen, unabhängig von den anderen Materialien und dem Gesamtbehältnis ihre Spezialbehandlung erfahren können.

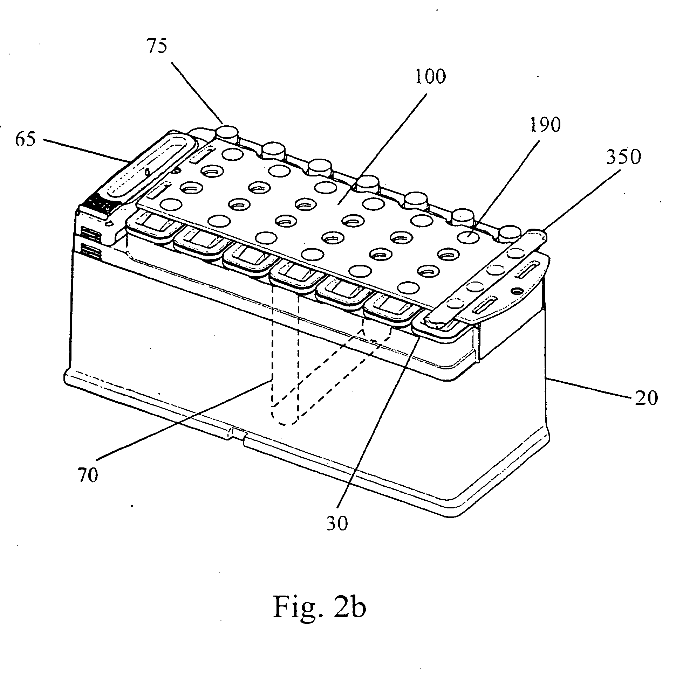

Die Kammern in der in Fig. 2b abgebildeten Ausführungsform sind jeweils mit einem Deckel (30) versehen, auf den das Öffnungswerkzeug (100) angewandt wurde. In der Figur ist exemplarisch und schematisch eine Kammer (70) gestrichelt dargestellt. Die durch das Öffnungswerkzeug erzeugten Durchlassöffnungen (190) ermöglichen das Eintreten des Pipettierwerkzeugs in die Kammer bzw. den Einsatz (70). In der Fig. 2b ist zudem eine Abdeckung (350), die beispielhaft nur auf einem der Deckel aufgebracht ist, gezeigt. Die Abdeckung kann vorteilhafterweise mehrfach verwendet werden und wird vorzugsweise aus einem elastischen Kunststoffmaterial hergestellt.

Fig. 3a zeigt eine perspektivische Ansicht eines Deckels (30) für das Behältnis (70) nach einer Ausführungsform. Fig. 3b zeigt einen Querschnitt durch diesen Deckel (30). Die bevorzugt konisch geformten Führungen (35) über den Öffnungsflächen (40) haben vorteilhafterweise eine Führungsfunktion für die Rohre (110) des Öffnungswerkzeugs (100), so dass dieses beim Aufsetzen auf den Deckel zentriert wird. Jeweils eine oder mehrere Öffnungsflächen (40) in dem Deckel (30) sind einer oder mehreren darunterliegenden Kammern (70) des Behältnisses (20) zugeordnet. In dem dargestellten Ausführungsbeispiel sind vier Öffnungsflächen für eine Kammer vorgesehen. Je nach Konstruktion können so über mehrere Pipettierwerkzeuge gleichzeitig durch mehrere Öffnungen in dem Deckel die gleiche Substanz aus einer Kammer und/oder unterschiedliche oder gleiche Substanzen aus mehreren Kammern entnommen werden. Bei mehreren Pipettierwerkzeugen können entsprechende Anpassungen der Ansaugvorrichtung (300) erforderlich sein, oder es können mehrere Ansaugvorrichtungen zum Einsatz kommen.

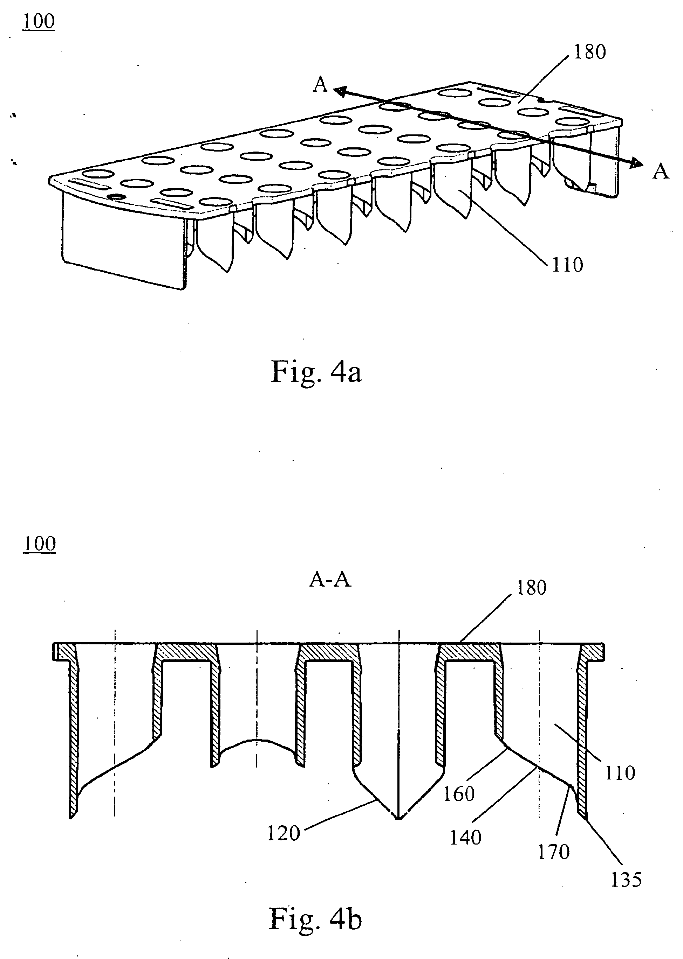

Fig. 4a zeigt ein bevorzugtes Ausführungsbeispiel des Öffnungswerkzeugs (100), das mehrere Rohre (110) aufweist, die in einer m x n Matrix angeordnet und durch ein Element (180) verbunden sind. Die Rohre (110) des Öffnungswerkzeugs weisen dabei verschiedene Winkelstellungen in Bezug auf ihre Längsachsen auf. Anders ausgedrückt, unterscheidet sich die durch die Normale einer Hauptebene des schrägen Abschlusses (140) des Rohrs (110) definierte Raumrichtung zwischen den einzelnen Rohren. Die Hauptebene ist dabei als diejenige Ebene zu verstehen, die nach Verständnis eines Fachmanns am ehesten geeignet ist, den Verlauf des Abschlusses zu repräsentieren.

Bevorzugt unterscheiden sich die Winkelstellungen der Normalen zwischen den einzelnen Rohren um Vielfache von 90 Grad, so dass vier verschiedene Winkelstellungen möglich sind. Dies bewirkt eine Führung und Zentrierung des Öffnungswerkzeugs beim Auflegen oder -setzen auf den Deckel (30) durch bevorzugt konisch geformte Führungen (35).

Fig. 4b zeigt einen Querschnitt durch das Öffnungswerkzeug aus Figur 4a entlang der Strecke A-A, bei dem die unterschiedlichen Schnittprofile der Rohre erkennbar sind, die durch die unterschiedlichen Winkelstellungen bedingt sind.

In einem Ausführungsbeispiel der Erfindung kann das Rohr (110) des Öffnungswerkzeugs (100) andere als eine kreisrunde Querschnittsform aufweisen, dazu gehören etwa (nicht limitierend) die Querschnittsformen Ellipse oder Polygon oder beliebige Variationen aus den vorgenannten. Zudem kann das Rohr (110) eine Struktur aufweisen, die nur im Wesentlichen rohrförmig ist, aber Abweichungen von der Rohrform aufweist. Dazu gehören etwa fehlende Segmente oder beliebig geformte Durchbrüche in der Wandstruktur.

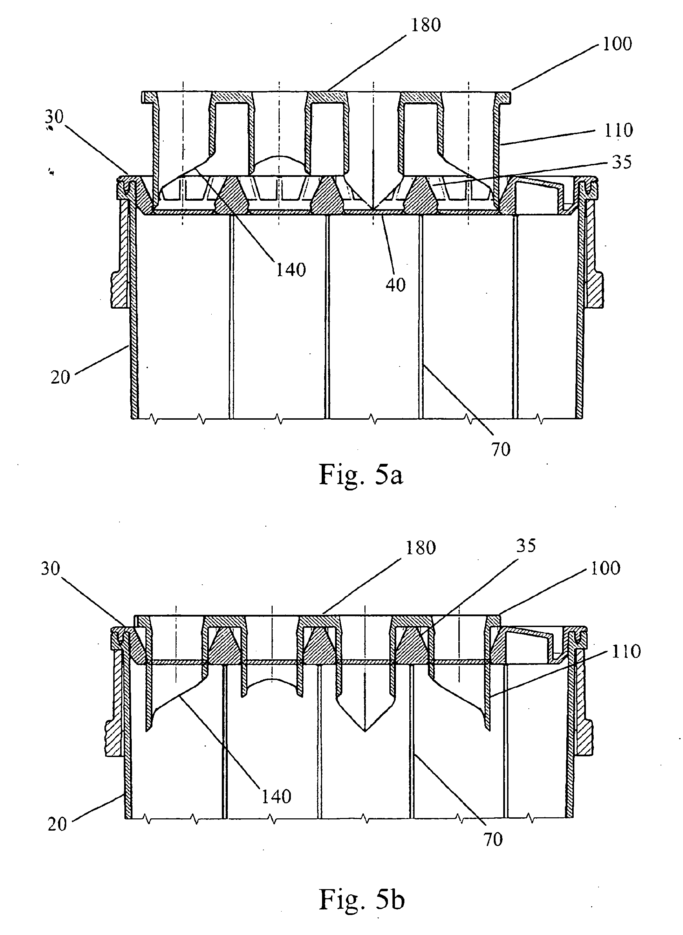

In der Figur 5a ist ein Behältnis (20) mit zugehörigem Deckel (30) und aufgesetztem Öffnungswerkzeug (100) gemäß einer bevorzugten Ausführungsform gezeigt. Die Spitzen der Rohre (110) liegen auf den Öffnungsflächen (40) des Deckels (30) auf. Dabei können technische Maßnahmen getroffen werden, die verhindern, dass das aufliegende Öffnungswerkzeug unbeabsichtigt die Öffnungsflächen des Deckels beschädigt bzw. durch diese hindurchtritt. Durch die konusartigen Führungen (35) sind die Rohre (110) und damit das Öffnungswerkzeug (100) im Verhältnis zum Deckel zentriert. Figur 5b zeigt den Zustand nach Eindrücken des Öffnungswerkzeugs (100) durch den Deckel (30). Die durch die Schneidkanten (140) ausgeschnittenen Öffnungsflächen (40) sind in Fig. 5b nicht dargestellt.

Wie bereits dargelegt, wird beim Bewegen bzw. Drücken des Öffnungswerkzeugs in Richtung der Öffnungsflächen ein innerhalb der Öffnungsfläche (40) gelegener Teil des Deckels (30) in Richtung des Behältnisses bewegt und auf diese Weise eine Öffnung in dem Deckel geschaffen. Der schräge Abschluss (140) des Rohrs (110) übt dabei als eine Art Schneidkante eine Kraft auf die Öffnungsfläche aus. In einem Ausführungsbeispiel der Erfindung weist die gesamte Öffnungsfläche (40) eine im Wesentlichen geringere Materialstärke als der restliche Deckel (30) auf, um das Öffnen zu erleichtern. In einem anderen Ausführungsbeispiel ist die Öffnungsfläche aus einem anderen, vorzugsweise weicheren Material als der restliche Deckel gefertigt, um das Aufschneiden zu erleichtern, was beispielsweise mit einem dem Fachmann bekannten 2K (2 Komponenten )Spritzgießprozess realisierbar ist. Dabei kann die Öffnungsfläche auch als Folie ausgeführt sein.

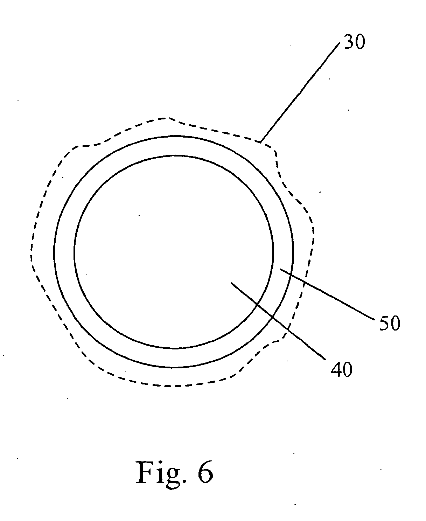

Fig. 6 zeigt einen Auschnitt eines Deckels (30) des Behältnisses (20) nach einem bevorzugten Ausführungsbeispiel der Erfindung. Dabei ist die Öffnungsfläche (40) durch einen Begrenzungsbereich (50) begrenzt. Der Begrenzungsbereich fungiert als eine Art Sollbruchstelle oder Solltrennstelle, entlang der die Auftrennung der Verbindung zwischen der Öffnungsfläche und dem Deckel durch die Schneidkante vorgenommen wird. Zu diesem Zweck ist der Begrenzungsbereich so ausgeführt, dass eine leichte Auftrennung durch die Schneidkante gewährleistet ist. Dies kann auf mehrere Arten gewährleistet werden.

In einer bevorzugten Variante ist der Begrenzungsbereich so ausgeführt, dass er eine andere, vorzugsweise geringere Materialstärke als der restliche Deckel (30) aufweist. In einem weiteren Ausführungsbeispiel weist der Begrenzungsbereich (50) selbst wiederum Bereiche unterschiedlicher Materialstärke auf. Als nicht-limitierendes Beispiel kann bei einem kreisförmigen Begrenzungsbereich (50) eine Hälfte des Kreises eine Materialstärke aufweisen, die einem Viertel von der des umgebenden Deckels entspricht, während die andere Hälfte eine Materialstärke von 70 Prozent von derjenigen des umgebenden Deckels entspricht.

In einem weiteren Ausführungsbeispiel ist der Begrenzungsbereich in einem anderen Material als der restliche Deckel ausgeführt, was beispielsweise mit einem dem Fachmann bekannten 2K Spritzgießprozess realisierbar ist. Dabei kann der Begrenzungsbereich beispielsweise auch als Folie ausgeführt sein.

Durch die Begrenzung der Öffnungsfläche durch einen Bereich dünnerer Materialstärke wird das Öffnen mit den erfindungsgemäßen Mitteln erleichtert. In dem vorgenannten Ausführungsbeispiel mit variabler Stärke des Begrenzungsbereichs (50) kommt ein weiterer Effekt hinzu. Der Bereich geringerer Stärke ermöglicht ein leichtes initiales Eindringen bzw. Einschneiden durch den Abschluss (140) des Rohrs (110). Mit zunehmendem Eindringen des Rohrs in Richtung des Behältnisses wird der Begrenzungsbereich (50) durch den schrägen Abschluss (140) immer weiter aufgetrennt. Es ist dabei wünschenswert, dass die Öffnungsfläche nicht vollständig vom Rest des Deckels abgetrennt wird, da der abgetrennte Teil sonst in das Behältnis fallen könnte. Dies könnte zu Problemen beim Pipettieren führen, wenn sich der abgetrennte Teil des Deckels vor die Öffnung des Pipettierwerkzeugs legt. Der etwas stärker ausgelegte Bereich des Begrenzungsbereichs trägt dazu bei zu verhindern, dass der Begrenzungsbereich vollständig aufgetrennt wird. In der Folge bleibt der abgetrennte Teil der Öffnungsfläche an dieser Stelle mit dem restlichen Deckel verbunden und fällt nicht in das Behältnis (20).

Das bereits beschriebene Ziel des Öffnens des Deckels mit geringem Kraftaufwand und die Verhinderung des vollständigen Abtrennens der Öffnungsfläche wird auch durch die folgenden Ausführungsbeispiele der Erfindung erreicht. Der benötigte Kraftaufwand ist besonders groß, wenn mehrere Öffnungsflächen gleichzeitig geöffnet werden sollen und wenn der Deckel fest mit dem Behälter verbunden, z.B. verschweißt, ist. Zudem werden erhebliche Kräfte benötigt bei Verwendung üblicher Verschlussmaterialien wie Polyethylen zur Herstellung des Deckels.

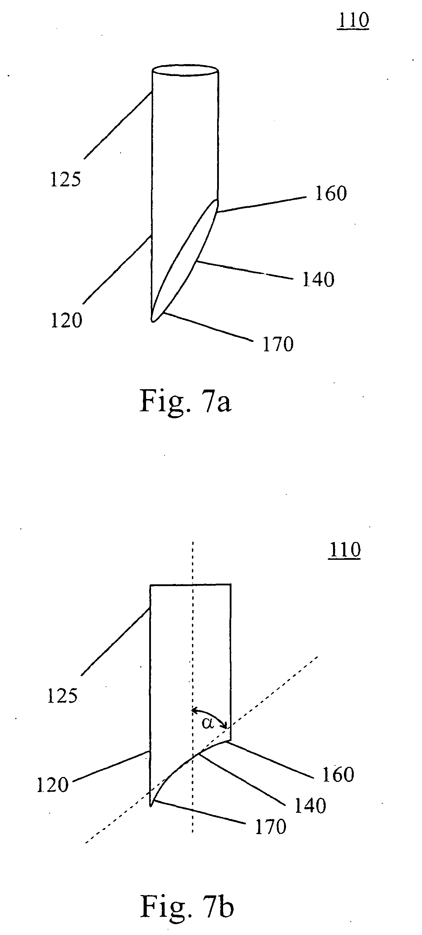

Fig. 7a zeigt ein Rohr (110) des Öffnungswerkzeugs nach einem Ausführungsbeispiel der Erfindung. Das Rohr (110) weist ein dorsales Ende (125) und ein distales Ende (120) auf. Der schräge Abschluss (140) (Schneidkante) weist ebenfalls ein dorsales Ende (160) und ein distales Ende (170) auf. In diesem Beispiel ist der Winkel der Abschrägung (140) konstant.

Fig. 7b zeigt ein Ausführungsbeispiel der Erfindung als Seitenansicht, bei dem die Abschrägung des Abschlusses (140) des Rohres (110) in dem Bereich vom dorsalen Ende (160) zum distalen Ende (170) des Abschlusses mindestens zwei verschiedene Winkel α relativ zur Rohrlängsachse aufweist. Vorzugsweise ist der Abschluss so ausgestaltet, dass der kleinere Winkel im Bereich des distalen Endes (170) und der größere Winkel im Bereich des dorsalen Endes (160) liegt. Dies ermöglicht ein Einschneiden bzw. Eindringen mit verringertem Kraftaufwand gegenüber einem Abschluss mit konstantem Schrägungswinkel. Durch den größeren Winkel am dorsalen Ende (160) ist die Schneidwirkung des schrägen Rohrabschlusses (140) in diesem Bereich verringert, wodurch bei geeigneter Dimensionierung ein Teil des Begrenzungsbereichs (50) nicht durchtrennt wird. Der Rohrabschluss (140) wirkt an dieser Stelle also nicht als Schneidkante, sondern als Drückkante, wobei der bereits abgetrennte Teil der Öffnungsfläche in Richtung des Inneren des Behältnisses gedrückt wird.

Figur 7c zeigt ein bevorzugtes Ausführungsbeispiel der Erfindung als Seitenansicht, bei dem die Gestaltung des Winkelverlaufs für den oben angeführten Zweck besonders vorteilhaft ausgestaltet ist. Aus fertigungstechnischen oder anderen Gründen kann es zweckmäßig sein, dass der Winkel der Abschrägung auf einem kurzen Abschnitt in unmittelbarer Nähe des distalen Endes (170) etwas größer gewählt wird als dem oben beschriebenen Verlauf entsprechen würde. Dies wird als im Umfang der Erfindung liegend betrachtet und ist in Fig. 7c dargestellt (Vergrößerung des Schrägungswinkels unterhalb von Bezugszeichen 170).

Figur 7d zeigt ein weiteres bevorzugtes Ausführungsbeispiel der Erfindung als Querschnittsansicht durch das Rohr (110). Dabei ist am distalen Ende (170) eine Spitze (135) ausgeformt, um ein Einschneiden bzw. den Beginn des Durchtrennens der Öffnungsfläche bzw. des Begrenzungsbereichs zu erleichtern. Die Spitze (135) ermöglicht ein Einschneiden bzw. Eindringen des Begrenzungsbereichs mit verringertem Kraftaufwand gegenüber einem Abschluss ohne entsprechende Spitze. Vorteilhafterweise wird die Spitze (135) mit einem der vorigen Ausführungsbeispiele (aus Fig. 7b, Fig. 7c) kombiniert, wie dies auch in Fig. 7d gezeigt ist. Es ist jedoch erfindungsgemäß auch möglich, die Ausführungsform mit Spitze mit einem Abschluss mit z.B. konstantem Schrägungswinkel α zu kombinieren.

Es sind auch erfindungsgemäße Ausgestaltungen möglich, bei denen ein komplettes Trennen der Öffnungsfläche vom restlichen Deckel durchgeführt wird. Dabei kann der Deckel entweder in das Behältnis fallen oder durch weitere Maßnahmen aus dem Behältnis entfernt werden.

In einem bevorzugten Ausführungsbeispiel bewirkt ein dorsales Ende (125) des Rohrs (110) einen reibschlüssigen Sitz des Rohrendes im Deckel (30) des Behältnisses (20) im aufgesetzten Zustand des Öffnungswerkzeugs (100). Zu diesem Zweck weist das obere Rohrende zum Beispiel eine leicht konusartige Form auf, die vorzugsweise einen Winkel von etwa 0,5 bis 5 Grad, weiter bevorzugt von etwa 0,7 bis 4 Grad und weiter bevorzugt von etwa 1 bis 3 Grad aufweist. Dieser Konus dient mehreren Zwecken. Er glättet eventuelle durch die Schneidkante erzeugte Ungleichmäßigkeiten in der Schnittkontur, die beim Einschneiden der Öffnungsfläche entstanden sind, indem er die Schnittkontur etwas aufweitet. Dadurch dichtet gleichzeitig das Rohr (110) bzw. das Öffnungswerkzeug (100) mit dem Deckel (30) des Behältnisses (20), was bei leicht flüchtigen Reagenzien wie Alkohol deren Verdampfen zumindest zu einem gewissen Teil verhindert bzw. vermindert. Schließlich bewirkt der Reibschluss einen stabilen mechanischen Sitz des Rohrs in dem Deckel bzw. Behältnis, wodurch auf die bereits kurz beschriebenen Positionselemente oder ähnliche Elemente zum Eingreifen o.ä. verzichtet werden kann.

Soll über den beschriebenen reibschlüssigen Sitz hinaus eine noch höhere Stabilität erreicht werden, kann das Öffnungswerkzeug (100) mit mindestens einem Positionselement zur passgenauen Positionierung an dem Behältnis (20) ausgestattet werden. Vorzugsweise werden dabei Elemente aus einer Gruppe gewählt, die aus Stift, Loch, Langloch, Nut und Steg besteht. Das Positionselement greift während des Zusammendrückens mit einem dazu passenden Positionselement als Gegenpart ein, das an dem Behältnis oder dem Deckel (30) angebracht ist. Entsprechende mögliche Paarungen bilden Stift-Loch, Stift-Langloch, Nut-Steg oder Stift-Nut, wobei auch Kombinationen anderer Elemente als im Umfang der Erfindung betrachtet werden.

Die Erfindung ist auch auf eine Vorrichtung zum Ausführen der offenbarten Verfahren gerichtet und umfasst Vorrichtungsteile zum Ausführen von jedem der beschriebenen Verfahrensschritte. Diese Verfahrensschritte können vermittels Hardwarekomponenten, einem durch geeignete Software programmierten Computer oder jede Kombination der zwei, oder in einer beliebigen anderen Weise ausgeführt werden. Des Weiteren ist die Erfindung auch auf Verfahren gerichtet, durch die die beschriebene Vorrichtung betrieben wird. Es enthält Verfahrensschritte zum Ausführen von jeder Funktion der Vorrichtung.

## Patentansprüche

1. Öffnungswerkzeug (100) für ein vorgefüllten Behältnis (20), das mit einem Deckel (30) verschlossen ist, der mindestens eine Öffnungsfläche (40) aufweist, die von einem Begrenzungsbereich (50) begrenzt ist, umfassend:
mehrere Rohre (110), die in einer m x n Matrix angeordnet und durch ein Element (180) verbunden sind, wobei die Rohre einen im wesentlichen der Form der Öffnungsfläche (40) entsprechenden Querschnitt und an einem distalen Ende (120) einen relativ zur Rohrlängsachse im wesentlichen schräg verlaufenden Abschluss (140) aufweisen, der beim Anwenden des Öffnungswerkzeugs einen innerhalb der Öffnungsfläche gelegenen Teil des Deckels (30) in Richtung des Behältnisses bewegt, um so eine Öffnung in dem Deckel zu schaffen, wobei der schräge Abschluss (140) an seinem distalen Ende (170) eine Spitze (135) aufweist und über den Bereich von seinem dorsalen Ende (160) zum distalen Ende (170) mindestens zwei unterschiedliche Winkel α relativ zur Rohrlängsachse aufweist und dazu ausgelegt ist, die Verbindung zwischen Öffnungsfläche (40) und Deckel (30) entlang des Begrenzungsbereichs (50) teilweise aufzutrennen, und wobei die Rohre verschiedene Winkelstellungen in Bezug auf ihre Längsachsen aufweisen.

2. Öffnungswerkzeug nach Anspruch 1, wobei der Winkel α der Abschrägung des Abschlusses (140) des Rohrs (110) relativ zur Rohrlängsachse im Bereich des distalen Endes (170) des Abschlusses im Wesentlichen kleiner ist als in anderen Bereichen des Abschlusses.

3. Öffnungswerkzeug nach Anspruch 1 oder 2, wobei das Rohr (110) ein Halteelement zur Fixierung des Öffnungswerkzeugs an dem Behältnis umfasst, vorzugsweise in Form einer zumindest teilweise um das Rohr umlaufenden Schulter (175) oder Rille.

4. Öffnungswerkzeug nach einem der Ansprüche 1 bis 3, wobei ein Ende des Rohrs (110) einen reibschlüssigen Sitz des Rohrs in dem Deckel (30) im aufgesetzten Zustand des Öffnungswerkzeugs (100) gewährleistet, vorzugsweise durch Ausgestaltung in Form eines Konus.

5. Behältnis (20) zum Bereitstellen von pipettierbaren Substanzen, umfassend:
- eine Mehrzahl von gleichartigen oder unterschiedlich geformten Kammern (70), die jeweils mindestens eine Öffnung (80) aufweisen,
- mindestens einen Deckel (30) zum Verschluss der Öffnungen (80),
- in dem mindestens einen Deckel (30) eingeformte konusartige Führungen (35),
- wobei der Deckel mehrere Öffnungsflächen (40) aufweist, die jeweils durch einen Begrenzungsbereich (50) begrenzt sind, der als Solltrennstelle ausgelegt ist, und wobei die Öffnungsflächen derart angeordnet sind, um eine Öffnung des Behältnisses mit einem Öffnungswerkzeug gemäß einem der Ansprüche 1 bis 4 zu ermöglichen;
und wobei die konusartigen Führungen (35) so in dem Deckel (30) über den Öffnungsflächen (40) angeordnet sind, dass Rohre des Öffnungswerkzeugs beim Aufsetzen auf den Deckel zu den Öffnungsflächen (40) geführt und zentriert werden.

6. Behältnis nach Anspruch 5, ferner umfassend ein Positionselement, das aus der Gruppe ausgewählt ist, die aus einem Stift, einem Loch, einem Langloch, einer Nut und einem Steg besteht.

7. Behältnis nach einem der Ansprüche 5 oder 6, wobei die Öffnungsfläche (40) im wesentlichen eine Form aufweist, die aus der Gruppe Kreis, Ellipse, und Polygon ausgewählt ist.

8. Behältnis nach einem der Ansprüche 5 bis 7, wobei die Öffnungsfläche (40) durch eines oder mehrere der Merkmale charakterisiert ist/sind, das oder die aus der folgenden Gruppe ausgewählt ist/sind:
a) die Öffnungsfläche (40) weist eine im wesentlichen geringere Materialstärke als der Deckel (30) auf,
b) die Öffnungsfläche (40) weist ein anderes Material als der Deckel (30) auf,
c) die Öffnungsfläche (40) ist durch einen Begrenzungsbereich (50) begrenzt, der im wesentlichen eine geringere Materialstärke als der Deckel (30) aufweist, wobei der Begrenzungsbereich (50) vorzugsweise Bereiche unterschiedlicher Materialstärke aufweist,
d) die Öffnungsfläche (40) ist durch einen Begrenzungsbereich (50) mit größerer Materialstärke als der Deckel (30) begrenzt.

9. Behältnis nach einem der Ansprüche 5 bis 8, wobei das Behältnis (20) mit im Wesentlichen sämtlichen benötigten Substanzen für ein vorbestimmtes Verfahren, insbesondere zum Prozessieren, Aufreinigen und/oder Analysieren von biologische Zielmoleküle enthaltenden Materialien gefüllt ist.

10. System (10) zur Entnahme einer pipettierbaren Substanz aus einem vorgefüllten Behältnis (20), umfassend
- ein Behältnis (20) gemäß einem der Ansprüche 5 bis 9,
- ein Öffnungswerkzeug (100) gemäß einem der Ansprüche 1 bis 4 mit einem Angriffspunkt (150) für ein Transportwerkzeug (200),
wobei das Öffnungswerkzeug (100) dazu ausgelegt ist, nach seiner Anwendung an dem Behältnis (20) zu verbleiben,
- ein Transportwerkzeug (200) zum Bewegen des Öffnungswerkzeugs (100) durch den Deckel (30),
- ein Pipettierwerkzeug (250), das dazu angepasst ist, im angewendeten Zustand des Öffnungswerkzeugs (100) durch das Rohr (110) zumindest zu einem Teil seiner Länge in das Innere des Behältnisses (20) eingeführt zu werden, und dessen eines Ende mit einer Ansaugvorrichtung (300) zum Ansaugen einer pipettierbaren Substanz aus dem Inneren des Behältnisses (20) verbindbar ist.

11. System nach einem der vorhergehenden Ansprüche, wobei ein dorsales Ende (125) des Rohrs (110) einen reibschlüssigen Sitz des Rohrs in dem Deckel (30) im aufgesetzten Zustand des Öffnungswerkzeugs (100) gewährleistet, vorzugsweise durch Ausgestaltung in Form eines Konus.

12. System nach einem der vorhergehenden Ansprüche, wobei eine durch eine Normale der Hauptebene des schrägen Abschlusses (140) des Rohrs (110) definierte Raumrichtung bei mindestens zweien der Rohre unterschiedlich ist.

13. Verfahren zur Entnahme einer pipettierbaren Substanz aus einem vorgefüllten Behältnis, umfassend die Schritte:
a) Bereitstellen eines Systems (10) nach einem der Ansprüche 10 bis 12,
b) Automatisiertes oder manuelles Auflegen eines Öffnungswerkzeugs (100) auf einen Deckel (30) des Behältnisses, wobei das Öffnungswerkzeug auf dem Behältnis zentriert wird,
c) Bewegen des Öffnungswerkzeugs mit Hilfe eines Transportwerkzeugs (200) durch den Deckel des Behältnisses, so dass ein Rohr (110) des Öffnungswerkzeugs eine Öffnungsfläche (40) in dem Deckel des Behältnisses (20) mindestens teilweise öffnet und das Rohr zu mindestens einem Teil seiner Länge in das Innere des Behältnisses eindringt und dort fixiert wird,
d) Positionieren eines Pipettierwerkzeugs (250) an eine Position über einer Durchlassöffnung (190) in dem Öffnungswerkzeug (100) und Absenken des Pipettierwerkzeugs in die Durchlassöffnung und in das darunter befindliche Rohr (110), bis mindestens ein Teil des Pipettierwerkzeugs aus dem distalen Ende (120) des Rohrs heraus in die zu entnehmende Substanz ragt,
e) Ansaugen einer in dem Behältnis befindlichen pipettierbaren Substanz durch das Pipettierwerkzeug (250) mittels einer damit verbundenen Ansaugvorrichtung (300).

14. Verfahren nach Anspruch 13, ferner umfassend einen Schritt
f) Vollständiges Herausziehen des Pipettierwerkzeugs (250) aus dem Öffnungswerkzeug (100).

15. Verfahren nach Anspruch 14, wobei die Schritte d) bis f) mehrfach wiederholt werden, unter Verwendung derselben oder unterschiedlicher Pipettierwerkzeuge (250).

16. Verfahren nach einem der Ansprüche 13 bis 15, wobei das Bewegen in Schritt c) durch das Eingreifen von Positionselementen zwischen dem Behältnis (20) und/oder dem Öffnungswerkzeug (100) und dem Transportwerkzeug (200) begleitet wird, die aus der Gruppe Stift - Loch, Stift - Langloch, und Nut - Steg ausgewählt sind.

17. Verfahren nach Anspruch 14 bis 16, wobei mit mehreren Pipettierwerkzeugen (250) gleichzeitig die Schritte d) bis f) durchlaufen werden.

18. Verfahren nach einem der Ansprüche 13 bis 17, wobei das Behältnis (20) mehrere baulich getrennte Kammern (70) aufweist, denen jeweils mindestens eine Öffnungsfläche (40) in einem Deckel (30) zugeordnet ist, und/oder wobei in Schritt c) eine Mehrzahl von Rohren (110) beim Bewegen des Öffnungswerkzeugs (100) eine Mehrzahl von Öffnungsflächen jeweils mindestens teilweise öffnet.

19. Verfahren nach einem der Ansprüche 14 bis 18, ferner umfassend einen Schritt:
g) Verschließen des Behältnisses (20) mit aufgesetztem Öffnungswerkzeug (100) mittels einer Abdeckung (350), die auf dem Öffnungswerkzeug angeordnet wird.

20. Verfahren nach einem der Ansprüche 13 bis 19, wobei in Schritt b) das Öffnungswerkzeug durch bevorzugt konisch geformte Führungen (35) am Deckel (30) zentriert wird.

## Claims

1. An opening tool (100) for a pre-filled container (20), which is closed with a lid (30) which has at least one opening surface (40) which is delimited by a boundary region (50), comprising:
a plurality of tubes (110), which are arranged in an m x n matrix and are connected by means of an element (180), wherein the tubes have a cross section approximately corresponding to the shape of the opening surface (40) and at a distal end (120) have an edge (140) which runs essentially obliquely relatively to the tube longitudinal axis, which moves a part of the lid (30) located inside the opening surface in the direction of the container when the opening tool is applied, in order thus to create an opening in the lid, wherein the oblique edge (140) has a point (135) at the distal end (170) thereof and has at least two different angles α relatively to the tube longitudinal axis over the region from the dorsal end (160) thereof to the distal end (170) and is designed to separate the connection between the opening surface (40) and lid (30) along the boundary region (50) to some extent, and wherein the tubes have different angular positions in relation to the longitudinal axes thereof.

2. The opening tool according to Claim 1, wherein the angle α of the bevel of the edge (140) of the tube (110) relatively to the tube longitudinal axis is essentially smaller in the region of the distal end (170) of the edge than in other regions of the edge.

3. The opening tool according to Claim 1 or 2, wherein the tube (110) comprises a holding element for fixing the opening tool on the container, preferably in the form of a shoulder (175) or groove running around the tube at least to some extent.

4. The opening tool according to one of Claims 1 to 3, wherein one end of the tube (110) ensures a frictionally engaged fit of the tube in the lid (30) in the placed state of the opening tool (100), preferably due to shaping in the shape of a cone.

5. A container (20) for providing pipettable substances, comprising:
- a plurality of very similar or differently shaped chambers (70) which have at least one opening (80) in each case,
- at least one lid (30) for closing the openings (80),
- cone-like guides (35) moulded in the at least one lid (30),
- wherein the lid has a plurality of opening surfaces (40), which are in each case delimited by means of a boundary region (50) which is designed as a predetermined breaking point, and wherein the opening surfaces are arranged so as to enable an opening of the container with an opening tool according to one of Claims 1 to 4;
and wherein the cone-like guides (35) are arranged in the lid (30) in such a manner over the opening surfaces (40) that tubes of the opening tool are guided to the opening surfaces (40) and centred when placed onto the lid.

6. The container according to Claim 5, further comprising a positioning element which is selected from the group which consists of a peg, a hole, a slot, a groove and a web.

7. The container according to one of Claims 5 or 6, wherein the opening surface (40) essentially has a shape which is selected from the group circle, ellipse and polygon.

8. The container according to one of Claims 5 to 7, wherein the opening surface (40) is **characterised by** one or a plurality of the features which is/are selected from the following group:
a) the opening surface (40) has an essentially lower material thickness than the lid (30),
b) the opening surface (40) has a different material than the lid (30),
c) the opening surface (40) is delimited by a boundary region (50) which essentially has a lower material thickness than the lid (30), wherein the boundary region (50) preferably has regions of different material thickness,
d) the opening surface (40) is delimited by a boundary region (50) with larger material thickness than the lid (30).

9. The container according to one of Claims 5 to 8, wherein the container (20) is filled with essentially all required substances for a predetermined method, particularly for processing, cleaning and/or analysing materials containing biological target molecules.

10. A system (10) for removing a pipettable substance from a pre-filled container (20), comprising
- a container (20) according to one of Claims 5 to 9,
- an opening tool (100) according to one of Claims 1 to 4 with a point of action (150) for a transporting tool (200),
wherein the opening tool (100) is designed to remain on the container (20) following its use,
- a transporting tool (200) for transporting the opening tool (100) through the lid (30),
- a pipetting tool (250), which is adapted to be inserted, in the applied state of the opening tool (100), through the tube (110) at least over part of the length thereof into the interior of the container (20) and the one end thereof can be connected to a suction device (300) for sucking a pipettable substance out of the interior of the container (20).

11. The system according to one of the preceding claims, wherein a dorsal end (125) of the tube (110) ensures a frictionally engaged fit of the tube in the lid (30) in the placed state of the opening tool (100), preferably due to shaping in the shape of a cone.

12. The system according to one of the preceding claims, wherein a spatial direction defined by means of a normal of the oblique edge (140) of the tube (110) is different for at least two of the tubes.

13. A method for removing a pipettable substance from a pre-filled container, comprising the steps:
a) providing a system (10) according to one of Claims 10 to 12,
b) automated or manual placing of an opening tool (100) onto a lid (30) of the container, wherein the opening tool is centred on the container,
c) moving the opening tool through the lid of the container with the aid of a transporting tool (200), so that a tube (110) of the opening tool opens an opening surface (40) in the lid of the container (20) at least to some extent and the tube penetrates at least over a part of the length thereof into the interior of the container and is fixed there,
d) positioning a pipetting tool (250) at a position above an outlet opening (190) in the opening tool (100) and lowering the pipetting tool into the outlet opening and into the tube (110) located therebelow until at least a part of the pipetting tool protrudes out of the distal end (120) of the tube into the substance to be removed,
e) sucking a pipettable substance located in the container through the pipetting tool (250) by means of a suction device (300) connected thereto.

14. A method according to Claim 13, further comprising a step
f) pulling the pipetting tool (250) out of the opening tool (100) completely.

15. The method according to Claim 14, wherein the steps d) to f) are repeated multiple times using the same or different pipetting tools (250).

16. The method according to one of Claims 13 to 15, wherein the movement in step c) is accompanied by the engagement of positioning elements between the container (20) and/or the opening tool (100) and the transporting tool (200), which are selected from the group peg/hole, peg/slot and groove/web.

17. The method according to Claims 14 to 16, wherein the steps d) to f) are run through at the same time with a plurality of pipetting tools (250).

18. The method according to one of Claims 13 to 17, wherein the container (20) has a plurality of structurally separated chambers (70), to which at least one opening surface (40) in a lid (30) is assigned, and/or wherein in step c) a plurality of tubes (110) open a plurality of opening surfaces at least to some extent in each case during the movement of the opening tool (100).

19. The method according to one of Claims 14 to 18, further comprising a step:
g) closing the container (20) with placed opening tool (100) by means of a cover (350) which is arranged on the opening tool.

20. The method according to one of Claims 13 to 19, wherein in step b), the opening tool is centred by means of preferably conically shaped guides (35) on the lid (30).

## Revendications

1. Outil d'ouverture (100) pour un récipient (20) prérempli qui est fermé par un couvercle (30) qui présente au moins une surface d'ouverture (40) délimitée par une zone de délimitation (50), comprenant :
plusieurs tubes (110) qui sont disposés dans une matrice m x n et sont reliés par un élément (180), les tubes présentant une section transversale correspondant sensiblement à la forme de la surface d'ouverture (40) et sur une extrémité distale (120) une arête (140) qui s'étend sensiblement en biais par rapport à l'axe longitudinal de tube et qui déplace lors de l'utilisation de l'outil d'ouverture une partie placée dans la surface d'ouverture du couvercle (30) en direction du récipient afin de créer ainsi une ouverture dans le couvercle, l'arête oblique (140) présentant une pointe (135) sur son extrémité distale (170) et présentant au moins deux angles différents α par rapport à l'axe longitudinal de tube sur la zone s'étend de son extrémité dorsale (160) à l'extrémité distale (170) et étant configurée afin de séparer en partie la liaison entre la surface d'ouverture (40) et le couvercle (30) le long de la zone de délimitation (50) et les tubes présentant différentes positions angulaires par rapport à leurs axes longitudinaux.

2. Outil d'ouverture selon la revendication 1, l'angle α du chanfrein de l'arête (140) du tube (110) par rapport à l'axe longitudinal de tube dans la zone de l'extrémité distale (170) de l'arête est sensiblement plus petit que dans d'autres zones de l'arête.

3. Outil d'ouverture selon la revendication 1 ou 2, le tube (110) comportant un élément de retenue pour la fixation de l'outil d'ouverture sur le récipient, de préférence sous la forme d'un épaulement (175) ou d'une rainure entourant au moins en partie le tube.

4. Outil d'ouverture selon l'une quelconque des revendications 1 à 3, une extrémité du tube (110) garantissant un siège entraîné par friction du tube dans le couvercle (30) dans l'état placé de l'outil d'ouverture (100), de préférence par configuration sous la forme d'un cône.

5. Récipient (20) pour la mise à disposition de substances pouvant être mises en pipette, comprenant :
- une pluralité de chambres (70) formées différemment ou de même type qui présentent respectivement au moins une ouverture (80),
- au moins un couvercle (30) pour la fermeture des ouvertures (80),
- des guidages (35) coniques formés dans l'au moins un couvercle (30),
- le couvercle présentant plusieurs surfaces d'ouverture (40) qui sont délimitées respectivement par une zone de délimitation (50) configurée comme une zone destinée à la séparation, et les surfaces d'ouverture étant disposées de manière à permettre une ouverture de récipient avec un outil d'ouverture selon l'une quelconque des revendications 1 à 4 ;
et les guidages (35) coniques étant disposés dans le couvercle (30) au-dessus des surfaces d'ouverture (40) de sorte que des tubes de l'outil de l'ouverture soient guidés et centrés lors du placement sur le couvercle par rapport aux surfaces d'ouverture (40).

6. Récipient selon la revendication 5, comprenant de plus un élément de positionnement qui est sélectionné dans le groupe qui se compose d'une goupille, d'un trou, d'un trou oblong, d'une rainure et d'une nervure.

7. Récipient selon l'une quelconque des revendications 5 ou 6, la surface d'ouverture (40) présentant sensiblement une forme qui est sélectionnée dans le groupe du cercle, de l'ellipse et du polygone.

8. Récipient selon l'une quelconque des revendications 5 à 7, la surface d'ouverture (40) étant **caractérisée par** une ou plusieurs des caractéristiques qui est/sont sélectionnée(s) dans le groupe suivant :
a) la surface d'ouverture (40) présente une épaisseur de matériau sensiblement plus faible que celle du couvercle (30),
b) la surface d'ouverture (40) présente un autre matériau que celui du couvercle (30),
c) la surface d'ouverture (40) est délimitée par une zone de délimitation (50) qui présente sensiblement une épaisseur de matériau plus faible que celle du couvercle (30), la zone de délimitation (50) présentant de préférence des zones d'épaisseur de matériau différente,
d) la surface d'ouverture (40) est délimitée par une zone de délimitation (50) avec une épaisseur de matériau supérieure à celle du couvercle (30).

9. Récipient selon l'une quelconque des revendications 5 à 8, le récipient (20) étant rempli de matériaux contenant sensiblement toutes les substances nécessaires pour un procédé prédéterminé, en particulier pour le traitement, le nettoyage et/ou l'analyse de molécules cibles.

10. Système (10) pour le retrait d'une substance pouvant être mise en pipette d'un récipient prérempli (20), comprenant :
- un récipient (20) selon l'une quelconque des revendications 5 à 9,
- un outil d'ouverture (100) selon l'une quelconque des revendications 1 à 4 avec un point d'application (150) pour un outil de transport (200), l'outil d'ouverture (100) étant configuré afin de rester après son utilisation sur le récipient (20),
- un outil de transport (200) pour le déplacement de l'outil d'ouverture (100) par le couvercle (30),
- un outil de mise en pipette (250) adapté afin d'être introduit dans l'état utilisé de l'outil d'ouverture (100) par le tube (110) au moins pour une partie de sa longueur à l'intérieur du récipient (20), et dont une extrémité peut être reliée à un dispositif d'aspiration (300) pour l'aspiration d'une substance pouvant être mise en pipette provenant de l'intérieur du récipient (20).

11. Système selon l'une quelconque des revendications précédentes, une extrémité dorsale (125) du tube (110) garantissant un siège entraîné par friction du tube dans le couvercle (30) dans l'état placé de l'outil d'ouverture (100), de préférence par configuration sous la forme d'un cône.

12. Système selon l'une quelconque des revendications précédentes, une direction dans l'espace définie par une normale du plan principal de l'arête oblique (140) du tube (110) étant différente pour au moins deux des tubes.

13. Procédé de retrait d'une substance pouvant être mise en pipette d'un récipient prérempli, comprenant les étapes suivantes :
a) mise à disposition d'un système (10) selon l'une quelconque des revendications 10 à 12,
b) placement automatisé ou manuel d'un outil d'ouverture (100) sur un couvercle (30) du récipient, l'outil d'ouverture étant centré sur le récipient,
c) déplacement de l'outil d'ouverture à l'aide d'un outil de transport (200) par le couvercle du récipient de sorte qu'un tube (110) de l'outil d'ouverture ouvre au moins en partie une surface d'ouverture (40) dans le couvercle du récipient (20) et le tube pénètre pour au moins une partie de sa longueur à l'intérieur du récipient et y soit fixé,
d) positionnement d'un outil de mise en pipette (250) sur une position au-dessus d'une ouverture de passage (190) dans l'outil d'ouverture (100) et abaissement de l'outil de mise en pipette dans l'ouverture de passage et dans le tube se trouvant dessous (110) jusqu'à ce qu'au moins une partie de l'outil de mise en pipette dépasse de l'extrémité distale (120) du tube dans la substance à retirer,
e) aspiration d'une substance pouvant être mise en pipette se trouvant dans le récipient par l'outil de mise en pipette (250) à l'aide d'un dispositif d'aspiration (300) relié à celui-ci.

14. Procédé selon la revendication 13, comprenant de plus une étape de
f) retrait complet de l'outil de mise en pipette (250) de l'outil d'ouverture (100).

15. Procédé selon la revendication 14, les étapes d) à f) étant répétées à différentes reprises en utilisant les mêmes ou des outils de mise en pipette (250) différents.

16. Procédé selon l'une quelconque des revendications 13 à 15, le déplacement de l'étape c) étant accompagné par l'engagement d'éléments de positionnement entre le récipient (20) et/ou l'outil d'ouverture (100) et l'outil de transport (200), lesquels éléments sont sélectionnés dans le groupe goupille - trou, goupille - trou oblong et rainure - nervure.

17. Procédé selon les revendications 14 à 16, les étapes d) à f) étant réalisées simultanément avec plusieurs outils de mise en pipette (250).

18. Procédé selon l'une quelconque des revendications 13 à 17, le récipient (20) présentant plusieurs chambres (70) séparées niveau construction, auxquelles est associée respectivement au moins une surface d'ouverture (40) dans un couvercle (30) et/ou à l'étape c), une pluralité de tubes (110) lors du déplacement de l'outil d'ouverture (100) ouvrant respectivement au moins en partie une pluralité de surfaces d'ouverture.

19. Procédé selon l'une quelconque des revendications 14 à 18, comprenant de plus une étape de :
g) fermeture du récipient (20) avec l'outil d'ouverture placé (100) à l'aide d'un recouvrement (350) qui est disposé sur l'outil d'ouverture.

20. Procédé selon l'une quelconque des revendications 13 à 19, l'outil d'ouverture étant centré à l'étape b) par des guidages (35) formés de préférence de manière conique sur le couvercle (30).
